Europäisches Patentamt

European Patent Office

Office européen des brevets

(11) Publication number: 0 185 543
A2

# (12) EUROPEAN PATENT APPLICATION

(21) Application number: 85309196.5

(22) Date of filing: 17.12.85

(51) Int. Cl.⁴: **C 08 L 59/00**
C 08 L 33/02, C 08 K 5/29
C 08 K 5/13

(30) Priority: 18.12.84 US 682878

(43) Date of publication of application:
25.06.86 Bulletin 86/26

(84) Designated Contracting States:
BE DE FR GB IT NL

(71) Applicant: CELANESE CORPORATION
1211 Avenue of the Americas
New York New York 10036(US)

(72) Inventor: Artripe, George, Jr.
603 West Yoakim Avenue
Kingsville Texas 78363(US)

(74) Representative: De Minvielle-Devaux, Ian Benedict
Peter et al,
CARPMAELS & RANSFORD 43, Bloomsbury Square
London WC1A 2RA(GB)

(54) Thermal stabilization of acetal polymers.

(57) The thermal stabilities of acetal polymers, e.g. oxymethylene/oxyethylene copolymers, are improved by blending with a minor amount of an ionic salt of a low molecular weight copolymer of an alpha-olefin and an alpha, beta ethylenically unsaturated carboxylic acid, e.g. a calcium salt of an ethylene/acrylic acid copolymer. The invention is particularly effective with pigmented acetal polymer composition.

EP 0 185 543 A2

# THERMAL STABILIZATION OF ACETAL POLYMERS

This invention relates to new molding compositions based on acetal polymers having improved thermal
stabilities by reason of a content of certain salts.

Molding compositions comprising acetal polymers
have been in commercial use for many years. They have
application in a wide variety of end uses e.g.,automobile
applications such as bumper extensions and instrument
panels, plumbing supplies such as valves, shower assemblies,
flush tank components, faucets (taps) and pipe fittings,
tool components such as screw driver adoptors, and household and personal products, such as quick boiling electric
water kettles, clothes hangers and combs.

While acetal polymers have a highly favourable
spectrum of physical properties which are responsible
for their wide commercial acceptance, such polymers tend
to degrade when subjected to elevated temperatures, e.g.
over 200°C. Various expedients have been proposed in
attempts to minimize this problem. Expedients proposed
in the product area include the addition of phenolic anti-
oxidants as disclosed in U.S. Patents 3,103,499 and 3,240,
753 and the addition of amidine compounds alone or in
conjunction with amino substituted amides as thermal
stabilizers for the polymer as taught by U.S. Patents
3,313,767 and 3,314,918. Expedients proposed in the new
process area include various types of hydrolysis designed
for acetal copolymers containing carbon to carbon bonds
in the polymer chain.e.g. oxymethylene – oxyethylene
copolymers, as disclosed, for example in U.S. Patents
3.174,948; 3,219,623; 3,318,848; and 3,418,280, and the
endcapping of hemiformal groups of oxymethylene homopolymers by acylation or etherification, e.g. as disclosed in
U.S. Patent 3,170,896.

While the foregoing expedients may somewhat improve the thermal stability of acetal polymers, an even greater degree of thermal stability is desirable, especially in certain applications. This is particularly true in the case of acetal polymers compounded with various pigment colors which often have the effect of significantly decreasing the thermal stability of the polymer.

It is known that relatively low molecular weight copolymer salts may be prepared by at least partially neutralizing the carboxyl groups of a low molecular weight copolymer of an alpha-olefin and an alpha, beta ethylenically unsaturated carboxylic acid. These copolymer salts are disclosed for example in U.S. Patents 4,381,376 and 4,912,040. They are stated to be useful as lubricants to improve the flow properties and make it easier to process various polymers. The disclosure of the latter polymers which can be lubricated by the copolymer salts does not however include acetal polymers.

It has now surprisingly been found that the thermal stability of an acetal polymer is improved by blending with the acetal polymer a minor amount of an ionic salt of a low molecular weight copolymer of an alpha-olefin and alpha, beta ethylenically unsaturated carboxylic acid. The beneficial effect of the copolymer salt in improving the thermal stability of the acetal polymer is particularly evident in the case of colored acetal polymer compositions containing pigments.

The acetal polymer may be an oxymethylene homopolymer, e.g. a homopolymer of formaldehyde or trioxane, the hemi-formal groups of which have been endcapped by acylation or etherification. Preferably, however, the acetal polymer is an oxymethylene copolymer prepared by copolymerizing trioxane with 0.1 to 15 mole percent of a cyclic ether having at least two adjacent carbon atoms. Copolymers of this type are described in U.S. Patent 3,027,352. Such polymers may be described as having at least one chain containing from 85 to 99.9 mole percent oxymethylene ($-OCH_2$) units interspersed with from 0.4 to 15 mole percent of -O-R- units wherein R is a divalent radical containing at least two carbon atoms directly linked to each other and positioned in the chain between the two valences, any substituent in the R radical being inert. The preferred copolymers are those made up of oxymethylene and oxyethylene groups, such as copolymers of trioxane with dioxolane or with ethylene oxide.

High molecular weight acetal polymers may be prepared in high yields and with rapid reaction rates by the use of catalysts comprising boron fluoride coordinate compounds in which oxygen or sulfur is the donor atom, as described in U.S. Patent 2,986,506.

When an oxymethylene copolymer is employed containing carbon-to-carbon bonds in the polymer chain, it is preferable to prestabilize the polymer by subjecting it to a melt hydrolysis as described in U.S. Patents 3,318,848 and 3,418,280 or to a solution hydrolysis as described in U.S. Patents 3,174,948 and 3,219,623.

Suitable ionic copolymer salts which are to be blended with the acetal polymers in accordance with this invention are disclosed in U.S. Patents 4,381,376 and 4,412,040. Such copolymer salts may be prepared by at least partially neutralizing a low molecular weight copolymer acid which is a copolymer of an alpha-olefin and an alpha, beta ethylenically unsaturated carboxylic acid. The latter acid can be a monocarboxylic acid or have more than one carboxylic group attached to it. The number average molecular weight of the copolymer acid is generally from 500 to 20,000, preferably from 1,000 to 15,000, more preferably from 1,000 to 6,000, and most preferably from 1,000 to 3,500. The acid is neutralized with at least one cation from the group consisting of metallic cations having a valence of 1 to 3.

- 4 -

The alpha,beta ethylenically unsaturated carboxylic acids which can be copolymerized with the alpha-olefin preferably have 3 to 8 carbon atoms. Examples of such acids include acrylic acid, methacrylic acid, ethacrylic acid, itaconic acid, maleic acid, fumaric acid and monoesters of other dicarboxylic acids, such as methyl hydrogen maleate, methyl hydrogen fumarate, ethyl hydrogen fumarate, and maleic anhydride, which behaves like an acid and is considered to be an acid in the present invention.

The alpha-olefin is preferably ethylene. The concentration of the ethylene in the copolymer is generally at least 50 mol percent, and preferably 80 mol percent.

A preferred copolymer acid is a copolymer of ethylene and an alpha,beta ethylenically unsaturated mono-carboxylic having 3 to 6 carbon atoms. A most preferred alpha, beta ethylenically unsaturated mono-carboxylic is acrylic acid. The ethylene acrylic acid copolymer generally has an acid number in the range from 1 to 180, an acid number from 40 to 160 being preferred and an acid number from 40 to 120 being most preferred. The acid number is determined by the number of milligrams of potassium hydroxide necessary to neutralize a gram of acid. The number average molecular weight is generally from 500 to 20,000, preferably from 1,000 to 15,000 more preferably from 1,000 to 6,000 and most preferably from 1,000 to 3,500.

The low molecular weight copolymer acids used to make the copolymer salts for use in the present invention can be prepared by any suitable process known in the art. An example of a suitable method is described in U.S. Patent 3,658,741.

The copolymer acids desirably have a viscosity not exceeding 1500 centipoises at 140° C.,preferably between 100 to 1200 centipoises at 140°C. Of special interest are the homogeneous copolymers of ethylene and acrylic acid containing 1% to 20% by weight acrylic acid in the copolymer, preferably 3.5% to 12%,characterized by a hardness (0.1 mm penetration) of 0.5 to 30,preferably 1 to 12, when tested at room temperature (77°F or 25°C) with an ASTM needle with a load of 100 grams for 5 seconds.

Cations having valences of 1 to 3 can be used to neutralize the copolymer acid. Preferably, metallic cations are derived from a group of metals which can be chosen from Groups IA,IIA, and IIIA and the transition elements of the Periodic Table of Elements. Metal cations which are preferred are sodium, potassium, magnesium, calcium, barium, zinc, and aluminum cations, calcium cations being most preferred. Cation containing materials used to neutralize the copolymers can be metal salts including: acetates, methoxides, oxylates, nitrates, carbonates and bicarbonates and metal oxides and metal hydroxides. Specific compounds which may be used include calcium hydroxide, calcium acetate, magnesium oxide and zinc acetate. The copolymer acid can be neutralized up to 100%; however, it is preferred to neutralize the copolymer acid to from 15 to 60 percent, and more preferably from 25 to 50 percent neutralization of the carboxylic acid groups.

Preferred copolymer salts for use in this invention are calcium salts, such as salts obtained by neutralizing with calcium hydroxide, for example, 25 to 60%, e.g. 47%, of the carboxyl groups of a copolymer of ethylene and 5% by weight of acrylic acid having a number average molecular weight of about 1300, a Brookfield viscosity of 500 cps at 140°C, an acid number of 40 mg KOH/g, a hardness of 2.0 dmm (ASTM D-5) and a density of 0.93 g/cc (ASTM D-1505). Other copolymer salts which may be used are obtained by neutralizing with calcium hydroxide, for example, 10 to 30% of the carboxyl groups of a copolymer of ethylene and 8% by weight of acrylic acid having a Brookfield viscosity of 650 cps at 140°C, an acid number of 80 mg KOH/g, a hardness of 2.0 dmm and a density of 0.93 g/cc; or by neutralizing with calcium hydroxide, for example, 5 to 25% of the carboxyl groups of a copolymer of ethylene and 15% by weight of acrylic acid having a Brookfield viscosity of 650 cps at 140°C, an acid number of 120, and a hardness of 11.5 dmm.

In preparing the acetal polymer compositions of this invention, a minor amount of the copolymer salt is blended with the acetal polymer. The blending may be effected in a conventional manner together with other additives ordinarily used with these polymers. Preferably, the copolymer salt is used in an amount of 0.05 to 10.0 wt.%, most preferably 0.1 to 2.0 wt.%, based on the total composition.

The addition of the foregoing copolymer salts to acetal polymers is particularly useful in the case of pigmented compositions which generally present greater problems of thermal instability than unpigmented compositions. The pigment may be of any type that is compatible with acetal polymers, e.g. red pigments such as azo dye reds and cadmium sulfide-cadmium selenide reds and "Mercadium" reds, blue pigments such as phthalocyanine blues, green pigments such as chromium oxide greens, white pigments such as titanium dioxide whites, and black pigments such as carbon blacks. Mixtures of various pigments may be used. Colored acetal polymer compositions contain a minor amount,generally 0.01 to 5 wt.% of pigment based on the weight of the composition.

Various other additives may also be added to the acetal polymer compositions for different purposes as is well known in the art, including bisphenol-type, ester-type or hindered phenol-type anti-oxidants,amidine stabilizers which probably act as acid/formaldehyde scavengers, nucleants, UV screens and absorbers, polyamides, metal soaps, reinforcers and fillers such as glass, talc, white mica and gold mica, and polymer substances such as polyurethanes, EVA, rubbers and thermoplastic resins.

The use of the copolymer salts in accordance with the invention results in a particularly marked improvement in the thermal stability of acetal polymers when used in conjunction with a phenolic anti-oxidant and preferably also an amidine stabilizer. Suitable phenolic anti-oxidants are disclosed, for example, in U.S. Patents 3,103,499 and 3,240,753. A particularly effective group of phenolic anti-oxidants comprises those containing two phenolic groups each with up to two alkyl substituents on the benzene ring, each alkyl substituent containing 1 to 4 carbon atoms; these include bis-phenolic diesters such as the diester of hexanediol-1,6 and 3-(3',5'-di-tert-butyl-4-hydroxy) phenylpropionic acid and alkylene bisphenols such as 2,2'-methylene bis-(4-methyl-6-tertiary butyl phenol),2,2'-ethylene bis-(4-methyl-6-tertiary butyl phenol), 4,4'-ethylidene bis- (6-tertiary butyl-3-methyl phenol) and 4,4'-butylidene bis -(6-tertiary butyl-3-methyl phenol). Suitable phenolic stabilizers other than alkylene bis-phenols include 2,6-ditertiary butyl-4-methyl phenol, octyl-phenol and p-phenyl phenol. The phenolic anti-oxidant is generally used in an amount not exceeding 5 wt.%, preferably from 0.1 to 1.0 wt %, and most preferably from 0.3 to 1.0 wt.% of the composition.

As stated above, an amidine stabilizer is preferably also employed in the composition. Suitable amidine compounds include the cyano-guanidine compounds including cyanoguanidine, itself and other compounds including those containing the divalent 1-cyano-3, 3 guanidine radical such as 1-cyano-3-methyl guanidine, 1-cyano-3-ethyl guanidine, 1-cyano-3-isopropyl guanidine, 1 cyano-3,3-diphenyl guanidine, 1-cyano-3-hydroxymethyl guanidine, 1-cyano-3-dodecyl guanidine, 1-cyano-3 (2-hydroxyethyl) guanidine, 1-cyano-3-(2-bromoethyl) guanidine,1-cyano-3-(m-chlorophenyl) guanidine and 1,3-dicyanoguanidine.

Amine substituted triazines constitute another suitable class of amidine compounds. The preferred compounds of this class are amine substituted derivatives of symmetrical triazines, including guanamines (2,4-diamino-sym.-triazines), melamine (2,4,6-triamino-sym.-triazine), and substituted melamines. The amino groups may be primary, secondary, or tertiary and other substituents such as hydroxyl substituents may be present. Of course, the amino groups and other substituents must be those which are inert, i.e. will not induce undesirable reactions. Among the specific compounds which are suitable are 2,4-diamino-6-phenyl-sym.-triazine; (benzoguanamine); 2,4-diamino-6-methyl-sym.-triazine;2,4-diamino-6-butyl-sym.-triazine;2,4-diamino-6-benzyloxy sym.triazine; 2,4-diamino-6-butoxy-sym.-triazine; 2,4-diamino-6-cyclohexyloxy-sym.-triazine;2,4-diamino-6-chloro-sym.-triazine;2,4-diamino-6-mercapto-sym.-triazine; 2,4-dihydroxy-6-amino-sym.-triazine (ammelide);2-hydroxy 4,6-diamino sym. triazine (ammeline); N,N,N'N'-tetracyano-ethyl benzoquanamine; 2,4,6-triamino sym.-triazine (melamine); phenyl melamine; butyl melamine;N,N-diethyl melamine; N,N-di-(2 hydroxyethyl) melamine;N,N-diphenyl melamine; N,N-diallyl melamine;N,N'N" -trimethyl melamine; N,N'N"-triethyl melamine; N,N'N"-tri(n-propyl) melamine; N,N'N"-tri-(n-butyl) melamine; N,N,N'N"-tetramethyl melamine; trimethylol melamine;tri-methoxymethyl melamine; hexamethoxymethyl melamine; N,N'N"-triphenyl melamine; and N,N'N"- trimethylolmelamine.

Other suitable amidine compounds are disclosed, for example, in U.S. Patent 3,313,767.

The amidine compounds are generally admixed with acetal polymer in amounts not exceeding 5% based on the weight of the composition, preferably in amounts from 0.01 to 1.0 wt.% and most preferably 0.03 to 0.2 wt.%.

- 9 -

The acetal polymer may be blended with the various additives discussed previously using conventional blending or mixing equipment and procedures. Thus, the acetal polymer and additives may be blended in any convenient sequence using, for example, conventional mills such as rubber mills, mixers and blenders such as Henschel mixers and tumble blenders and extruders such as single screw, biaxial and Brabender extruders. In most cases, the components are first dry-mixed, e.g. in a tumble or Henschel blender, followed by melt blending, e.g. in an extruder at a temperature of 170 to 215°C and a blending time of 1 to 3 minutes.

Some of the additives may be added to finely divided acetal polymer in the form of a solution in an appropriate solvent before the final step of intimate mixing.

The invention is illustrated by the following Examples. Example 1-8 are in accordance with the invention, while Control Examples A-E are outside the invention and are provided for comparative purposes.

Control Example A and Example 1 are intended to illustrate the effect of this invention in improving the thermal stability of natural (i.e uncolored) acetal polymer molding compositions.

### Control Example A

An acetal copolymer containing oxymethylene and randomly distributed oxyethylene units in the polymer chain was prepared by copolymerizing trioxane and about 2 wt.% of ethylene oxide as disclosed in U.S. Patent 2,986,506. A blend was prepared of 50% of this copolymer melt hydrolyzed as disclosed in U.S. Patent 3,418,280 and 50% of such copolymer solution hydrolyzed as disclosed in U.S. Patent 3,174,948. The resulting acetal polymer (which had a number average molecular weight of 38,000 and a melt index of about 9) was dry mixed with 0.25 wt.% of a nucleant consisting of the diglycidyl ether of butanediol-1,4,0.50 wt.% of an anti-oxident consisting of the diester of hexanediol-1,6 and 3-(3',5'-di-tert-butyl-4'-hydroxy) phenylpropionic acid sold as "Irganox 259" by Ciba Giegy Corp., 0.25 wt.% of melamine as an amidine stabilizer,0.35 wt.% of a UV light absorber consisting of 2 hydroxy-4-n-octoxybenzophenone sold as "Cyasorb UV-531" by American Cyanamid Co., and 0.15 wt.% of a radical scavenger and UV light stabilizer consisting of bis- (1,2,2,6,6-pentamethyl-4- piperidinyl) (3,5-di-tert-butyl-4-hydroxybenzyl)butylpropanedioate sold as "Tinuvin 144" by Ciba-Geigy Corp., 0.20 wt.% of a lubricant consisting of the diamide of ethylene diamine and stearic acid sold as "Acrawax C" by Glyco Chemicals, Inc., the remainder being the acetal copolymer. All weight percentages were based on the total composition. The dry blended composition was then melt blended by working it through a screw extruder at about 190°C with an extrusion residence time of about one minute. The thermal degradation rate (Kd 230) of the composition was 0.028 wt.%/min. The thermal stabilities of this and the other compositions of the disclosure are indicated by the thermal degradation rate determined by placing a sample of the composition in an open vessel in a recirculating air oven at a temperature of 230°C $\pm$ 0.25°C for a period of 45 minutes $\pm$ 10 seconds and measuring its weight loss. The thermal degradation rate in wt.%/min. is then determined by dividing the total wt% loss by 45. "Irganox", "Cyasorb", "Tinuvin" and "Acrawax" are Trade Marks.

### Example 1

The acetal copolymer composition of Control Example A was dry blended with 0.1 wt.% based on the composition of a copolymer sold as "A-C 201A" by Allied Chemical Corp. and prepared as described in U.S. Patent 4.381,376 by neutralizing with calcium hydroxide 47% of the carboxyl groups of a copolymer of ethylene and 5% by weight of acrylic acid having a number average molecular weight of 1300, a Brookfield viscosity of 500 cps at 140° C, an acid number of 40 mg.KOH/g, a hardness of 2.0 dmm (ASTM D-5) and a density of 0.93 g/cc (ASTM D-1505). The composition was then re-extruded at about 190°C. The composition had a thermal degradation rate (KD 230) of 0.012 wt%/min.

The results of Control Examples B,C, and D and Examples 2 to 7 show the effects of this invention in improving the thermal stability of red colored acetal copolymer compositions containing a red pigment formulation.

### Control Example B

The procedure of Control Example A was repeated except that 0.79411 wt.% of a red pigment blend was also blended with the acetal copolymer together with the other additives. The pigment blend consisted of 0.67725 wt.% of a red azo dye pigment (C.I. Pigment Red 60),0.08783 wt. % of cadmium sulfide-cadmium selenide red pigment (C.I. Pigment Red 108), 0.02667 wt.% of another azo dye red pigment (C.I. Pigment Red 202) and 0.00236 wt.% of a carbon black pigment (C.I. Pigment Black 7).

The thermal degradation rate (Kd 230) of this composition was 0.106 wt%/min.

### Example 2

The red color4d acetal copolymer composition of Control Example B was dry blended and re-extruded with 0.1 wt.% of the copolymer salt of Example 1. The resulting composition had a thermal degradation rate (KD 230) of 0.044 wt.%/min.

## Example 3

The procedure of Example 2 was followed using 0.2 wt.% of the copolymer salt of Example 1. The resulting composition had a thermal degradation rate (Kd 230) of 0.045 wt%/min.

## Example 4

The procedure of Example 2 was followed using 0.5 wt.% of the copolymer salt of Example 1. The thermal degradation rate (Kd 230) of the resulting composition was 0.014 wt.%/min.

## Control Example C

A different batch of acetal copolymer composition was prepared as described in Control Example B. The thermal degradation rate (Kd 230) of this composition was 0.054 wt.%/min.

## Example 5

The composition of Control Example C was dry blended and reextruded with 0.5 wt.% of the copolymer salt of Example 1. The resulting composition had a thermal degradation rate (Kd 230) of 0.012 wt.%/min.

## Example 6

The procedure of Example 5 was followed using 2.5 wt.% of the copolymer salt of Example 1. The thermal degradation rate (Kd 230) of the resulting composition was 0.012 wt%/min.

## Control Example D

A different batch of acetal copolymer composition was prepared as described in Control Example B. The thermal degradation rate (Kd 230) of this composition was 0.175 wt.%/min.

## Example 7

The composition of Control Example D was dry blended and re-extruded with 1.0 wt.% of the copolymer salt of Example 1. The resulting composition had a thermal degradation rate (Kd 230) of 0.017 wt.%/min.

Control Example E and Example 8 show the effect of this invention in improving the thermal stability of a black colored acetal polymer composition containing carbon black.

## Control Example E

A black acetal copolymer composition was prepared as described in Control Example B except that, in place of the red pigment formulation there described, 2 wt.% of a carbon black pigment (C.I.Pigment Black 7) was blended with the acetal copolymer and other additives. The thermal degradation rate (Kd 230) of the composition was 0.090 wt.%/min.

## Example 8

The black-colored acetal copolymer composition of Control Example E was dry blended and re-extruded with a 0.5% of the copolymer salt of Example 1. The resulting composition had a thermal degradation rate (Kd 230) of 0.018 wt.%/min.

A comparison of the thermal degradation rates of the polymers of, respectively, Control Example A and Example 1; Control Example B and Examples 2,3 and 4; Control Example C and Examples 5 and 6; Control Example D and Example 7; and Control Example E and Example 8,show that the addition of a minor amount of copolymer salt as described previously to an acetal polymer composition substantially improves the thermal stability of the composition.

- 14 -

0185543

## Claims

1. A moldable composition comprising an acetal polymer and a minor amount of an ionic salt of a low molecular weight copolymer of an alpha-olefin and an alpha,beta ethylenically unsaturated acid.

2. The composition of claim 1 wherein the low molecular weight copolymer is a copolymer of ethylene and acrylic acid having an acid number of 40 to 160 and a number average molecular weight of 1000 to 15000.

3. The composition of claim 1 or 2 wherein the ionic salt is a calcium salt of the low molecular weight copolymer in which 15 to 60 percent of the carboxyl groups are neutralized.

4. The composition of any of claims 1-3 wherein the acetal polymer is a copolymer containing from 85 to 99.9% oxyethylene units in the polymer chain.

5. The composition of any of claims 1-4 containing a minor amount of a pigment color.

6. The composition of any of claims 1-7 containing a phenolic anti-oxidant and an amidine stabilizer.